Europäisches Patentamt

European Patent Office

Office européen des brevets

(11) Publication number: 0 571 702 A2

# EUROPEAN PATENT APPLICATION

(21) Application number: 93100301.6

(22) Date of filing: 11.01.93

(51) Int. Cl.5: G06F 3/00

(30) Priority: 26.05.92 JP 133452/92
26.05.92 JP 133453/92

(43) Date of publication of application:
01.12.93 Bulletin 93/48

(84) Designated Contracting States:
DE FR GB IT

(71) Applicant: TAKENAKA CORPORATION
4-1-13, Hom-machi,
Chuo-ku
Osaka-shi, Osaka-fu 541(JP)

(72) Inventor: Harakawa, Kenichi
3-1-8-105, Oguradai,
Inzai-machi
Inba-gun, Chiba-ken(JP)

(74) Representative: Kern, Wolfgang, Dipl.-Ing. et
al
Patentanwälte Kern, Brehm & Partner
Albert-Rosshaupter-Strasse 73
D-81369 München (DE)

(54) Hand pointing type input unit and wall computer module.

(57) This invention relates to a hand pointing type input unit to input information into a computer, and aims to input into the computer by the action of a hand or finger without touching equipment. And, this invention relates to a wall computer module disposed on the wall of a building and aims to make interface with a person without touching.

This invention contains a display to indicate certain information, a plurality of imaging means to take an image of the hand or finger of an inputting person indicated to the above display, a direction calculating means to calculate the direction which is indicated by the hand or finger to the display based on an image taken by the imaging means, a position indicating means to indicate the position on the display corresponding to the direction calculated by the direction calculating means on the display by the cursor, a click action detecting means to detect click action of the hand or finger, and a selection means to select the information at a part where the above cursor is positioned when the click action is detected by the click action detecting means as the information instructed by the inputting person.

And, this invention contains a board type module body to be fixed on a wall, a display to be disposed on the front face of the module body and to indicate certain information, an imaging means to be disposed on the module body, and a computer body disposed on the module body to control the display and input information based on an image taken by the imaging means.

FIG.1

## BACKGROUND OF THE INVENTION

### FIELD OF THE INVENTION

This invention relates to a hand pointing type input unit which allows input of information into a computer by simple movement of a hand or finger without touching a device. And, this invention relates to a wall computer module which is disposed on a wall of buildings and can make interface with a human being without being touched.

### DESCRIPTION OF THE PRIOR ART

Heretofore, entry of information into a computer is generally made with a mouse, pen, keyboard or touch panel.

However, a method of entering information through a mouse, pen or keyboard requires to operate it while sitting at a desk. For example, there are drawbacks that it is difficult to simply enter information in the state standing on a passage or lounge or having a sofa to relax, or to enter information at a place away from the device.

On the other hand, a method using a touch panel can enter information rather simply, but since hands directly touch a switchboard face, when the switchboard is on a CRT display, dirt due to touching cannot be neglected, and there is a disadvantage of inducing uncomfortable feeling due to static electricity caused when touched.

Further, there is a problem that it is difficult to enter information at a place away from the device.

### SUMMARY OF THE INVENTION

This invention was completed to remedy the above problems, and aims to provide a hand pointing type input unit capable of entering information in the device by simply moving a hand or finger without touching the device.

Another object of this invention is to provide a wall computer module which can interface with a human being without touching.

To accomplish the above objects, the hand pointing type input unit of this invention contains a display to indicate certain information, a plurality of imaging means to take an image of the hand or finger of an inputting person indicated on the above display, a direction calculating means to calculate the direction which is indicated by the hand or finger to the display based on an image taken by the imaging means, a position indicating means to indicate the position on the display corresponding to the direction calculated by the direction calculating means on the display by the cursor, a click action detecting means to detect the click action of the hand or finger, and a selection means to select the information at a part where the above cursor is positioned when the click action is detected by the click action detecting means as the information instructed by the above inputting person.

The wall computer module of this invention contains a board type module body to be fixed on a wall, a display to be disposed on the front face of the module body and to indicate certain information, an imaging means to be disposed on the module body, and a computer body disposed on the module body to control the display and input information based on an image taken by the imaging means.

With the hand pointing type input unit of this invention, when an inputting person designates information on the display with a hand or finger in front of the display, the direction which is indicated by the hand or finger to the display is calculated based on the image taken by the imaging means, and the cursor is moved to the position on the display corresponding to the calculated direction, then, when the inputting person confirms the position of cursor and makes click action, information of a part where the cursor is positioned when the click action is made is inputted as information indicated by the inputting person.

And, in the wall computer module of this invention, the module body is fixed on the wall of a building, and when a person stands in front of the module body, for example, the action of the person or belongings to the person are taken by the imaging means, and based on this taken image, certain information is entered into the computer body.

As described above, in the hand pointing type input unit of this invention, when the inputting person indicates information of the display by a hand or finger in front of the display, the direction that the hand or finger indicates to the display is calculated based on an image taken by the imaging means, and the cursor is moved to the position on the display corresponding to the calculated direction, then when the inputting person confirms the position of the cursor and makes the click action, information of a part where the cursor is positioned when the click action is made is inputted as information indicated by the inputting person. Thus, it is advantageous that information can be inputted into the computer by the movement of the hand or finger without touching the device.

And, in the wall computer module of this invention, the module body is fixed on the wall of a building, and when a person stands in front of the module body, for example the action of the person or belongings to the person are taken by the imaging means, and based on this image taken, certain information is inputted into the computer, so that it has an advantage that non-contact interface with the person becomes possible easily.

## DESCRIPTION OF THE DRAWINGS

Fig. 1 is a block diagram showing one example of the hand pointing type input unit of this invention.

Fig. 2 is a flowchart showing the operation of the hand pointing type input unit of Fig. 1.

Fig. 3 is an explanatory view showing a method to calculate the direction pointed by a forefinger.

Fig. 4 is an explanatory view showing an example of another arrangement of the imaging means.

Fig. 5 is an explanatory view showing an example of another arrangement of the imaging means.

Fig. 6 is a perspective view showing an example of the wall computer module of this invention.

Fig. 7 is a circuit diagram showing the circuit structure of the wall computer module of Fig. 6.

Fig. 8 is a block diagram of the hand pointing type input unit to be accommodated into the computer body of Fig. 6.

Fig. 9 is a flow chart showing the operation of the hand pointing type input unit of Fig. 8.

Fig. 10 is an explanatory view showing a method for calculating the direction indicated by a forefinger.

## DESCRIPTION OF THE PREFERRED EMBODIMENT OF THE INVENTION

Now, this invention will be described in detail in examples with reference to drawings.

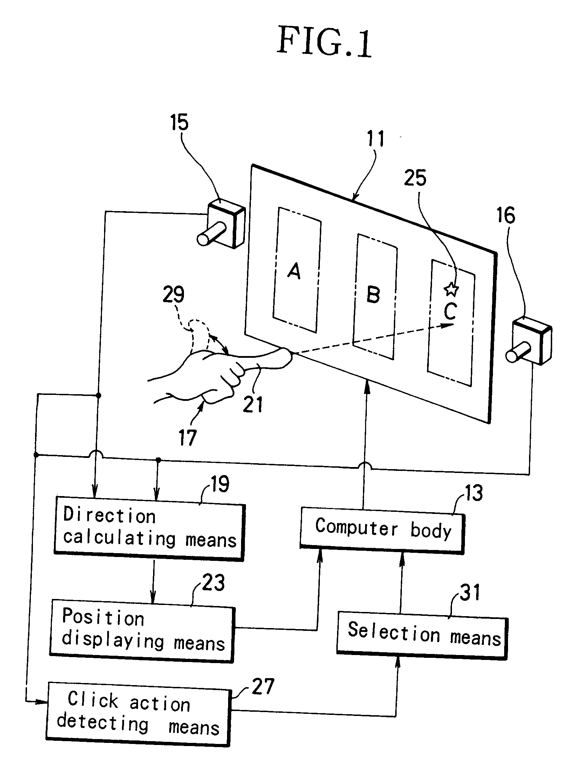

Fig. 1 shows one example of the hand pointing type input unit of this invention. In Fig. 1, reference numeral 11 shows a display to show certain information.

For this display 11, liquid-crystal display, LED display and CRT display are used.

And, this display 11 is controlled by computer body 13 provided with CPU, memory and the like.

In this example, the display 11 displays for example three information A, B and C.

Reference numerals 15 and 16 represent two imaging means to take an image of hand 17 of an inputting person reached out to the display 11.

These imaging means 15, 16 contain a video camera.

Reference numeral 19 represents a direction calculating means to calculate the direction where forefinger 21 indicates to the display 11 based on an image taken by these imaging means 15, 16.

Reference numeral 23 represents a position indicating means to calculate the position on the display 11 corresponding to the direction calculated by the direction calculating means 19, and to indicate the calculated position on the display 11 by cursor 25 via the computer body 13.

Reference numeral 27 represents a click action detecting means to detect the click action of thumb 29 based on the image taken by the imaging means 15, 16.

In this example, the click action is regarded to be made when the thumb 29 is erected in the state that certain information is indicated by the forefinger 21.

Reference numeral 31 represents a selection means to select information of a part where the cursor 25 is positioned when the click action is detected by the click action detecting means as the information designated by the inputting person.

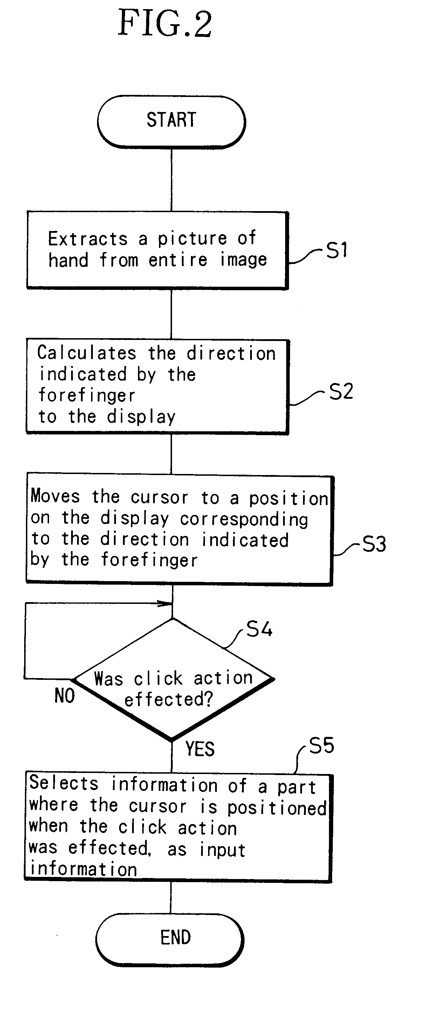

Fig. 2 is a flowchart showing the operation of the above hand pointing type input unit.

First, when the inputting person stands in front of the display 11, the entire image of the inputting person is taken by the imaging means 15, 16. From the entire image, an image of hand 17 is extracted by the direction calculating means 19 (step S1).

This extraction is effected by using characteristic extraction by color and shape, preponderant recognition of the center position of the entire image, pattern matching, neuron network, and fuzzy.

Then, when the inputting person indicates information of the display 11 by the forefinger 21, the direction indicated by the forefinger 21 to the display 11 is calculated by the direction calculating means 19 (step S2).

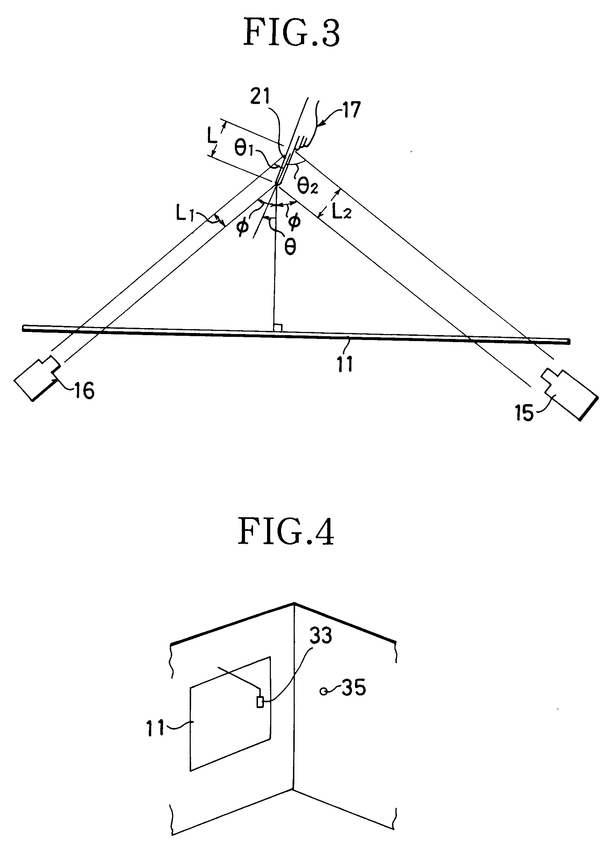

That is to say, for example, as shown in Fig. 3, when the angle formed by the direction indicated by the forefinger 21 and the normal line of the display 11 is , the length of the forefinger 21 is L, the angle formed by the normal line of the display 11 and the unobstructed line of the imaging means 15, 16 is , and the length of apparent forefinger 21 measured by the imaging means 15, 16 is L , L , there are relations as follows:

$$L = L^* \sin( - ) \qquad (1)$$

$$L = L^* \sin( + ) \qquad (2)$$

When is obtained from the above equations (1) and (2),

$$= \sin [(L + L )\cos /K].$$

And,

$$K = ((L + L ) - 4L L \sin ) .$$

When operation is effected according to the above equation, the angle formed by the direction indicated by the forefinger 21 and the normal line of the display 11 can be obtained.

Then, with the position indicating means 23, based on the angle formed by the direction indicated by the forefinger 21 and the normal line of the display 11, the cursor 25 is moved to the position on the display 11 corresponding to the direction indicated by the forefinger 21 (step S3).

Then, it is detected whether the click action was effected by judging if the thumb 29 is erected or not by the click action detecting means 27 (step S4).

And, when the click action is effected, information at a part where the cursor 25 is positioned, for example C is selected as information indicated by the inputting person (step S5).

Thus, when information C is selected, the computer body 13, for example, indicates on the display 11 the related information which is previously inputted to this information C.

In the hand pointing type input unit structured as above, when an inputting person indicates information on the display 11 by the forefinger 21 in front of the display 11, based on the image taken by the imaging means 15, 16, the direction indicated by the forefinger 21 against the display 11 is calculated, and the cursor 25 is moved to the position on the display 11 corresponding to the calculated direction, then when the inputting person acknowledges the position of the cursor 25 and makes the click action, information at a part where the cursor 25 is positioned when the click action is effected is inputted as the information indicated by the inputting person, so that by the action of the hand 17 and fingers 21, 29 without touching the equipment, information can be inputted in the computer.

And, in a naturally standing state, information can be simply inputted, and also information can be easily inputted at a position away from the equipment.

Further, the display is not contaminated as when a touch panel is used, and discomfort due to static electricity is not caused.

And, this hand pointing type input unit can be broadly applied for bidirectional billboard, wall game board for attraction such as Othello game and chess, multi-functional guide board, opening-closing operation of door, opening-closing operation of garage door, substitute for a gun for action type game, remote control of slide projector for meetings, and operation of a display board for working content and handling explanation of equipment at semi-conductor plants.

In the example described above, indication to the display 11 is made by the forefinger 21 and the click action is made by the thumb 29. But, this invention is not limited to the above example. For example, another finger may be used and the hand may be bent for indication.

And, in the above example, two imaging means 15, 16 are disposed at the same height with the display 11 but this invention is not limited to this example. For example, at a corner, one imaging means 33 may be disposed above the display 11, and the other imaging means 35 may be disposed on the wall on the side of the display 11. In this case, the click action of the thumb 29 and the direction of the forefinger 21 of the hand 17 which is vertically and horizontally directed to the display 11 can be detected by the pattern recognition of the image taken by the imaging means 33, 35.

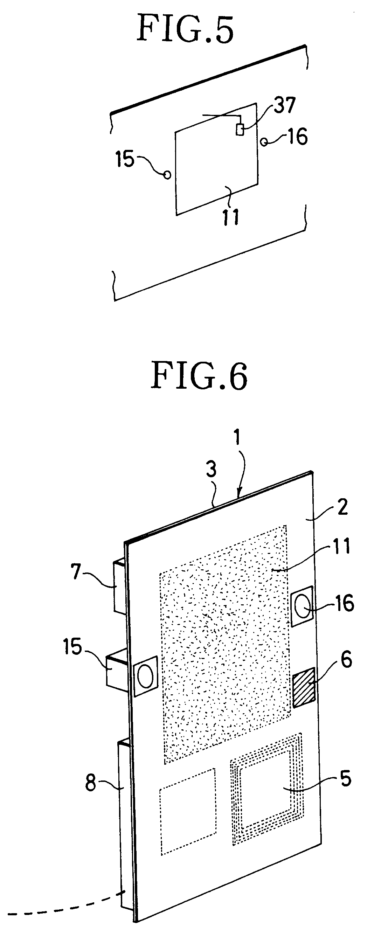

Further, in the above example, two imaging means 15, 16 are disposed but this invention is not limited to such an example. Three or more imaging means may be disposed. For example, as shown in Fig. 5, one additional imaging means 37 may be disposed at the upper position of the display 11, so that the direction of the forefinger 21 of the hand 17 which is vertically and horizontally directed to the display 11 and the click action of the thumb 29 can be detected by only the pattern recognition of the image taken by the imaging means 15, 16 and 37.

Then, an example in which details of the wall computer module of this invention are shown in the drawings in detail will be described.

Fig. 6 shows an example of the wall computer module of this invention. In the drawing, reference numeral 1 represents a plate-shaped module body.

This module body 1 consists of glass plate 2 and frame 3 which is disposed outside the glass plate 2.

At the front and upper part of the module body 1, the display 11 is disposed to indicate certain information.

This display 11 may be a liquid-crystal display, LED display or CRT display.

On either side of the display 11 of the module body 11, imaging means 15, 16 are disposed.

These imaging means 15, 16 can be a video camera.

At the lower section of the display 11 of the module body 1, speaker 4 and non-contact IC card transceiver 5 are disposed.

And, odor producer 6 is disposed below the imaging means 16 of the module body 1.

On the back and upper part of the module body 1, controller 7 is disposed to control equipment such as lighting and air conditioner, and at the lower part, computer body 8 is disposed to control the display 11 and to input information based on an image taken by the imaging means 15, 16.

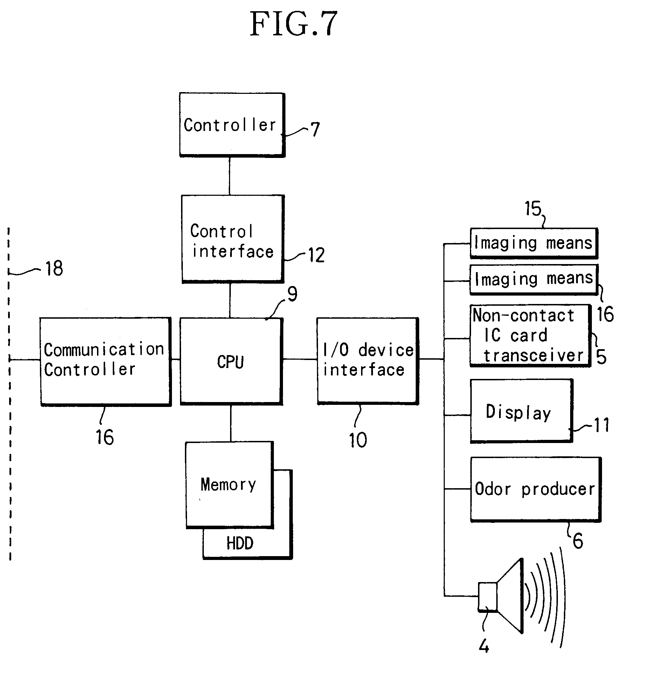

Fig. 7 shows a circuit structure of the above wall computer module, and reference numeral 9 represents CPU within the computer body 8.

To this CPU 9 are connected memory and HDD.

And, to CPU 9 are connected imaging means 15, 16, non-contact IC card transceiver 15, display 11, odor producer 6 and speaker 4 via I/O device interface 10.

And, to CPU 9 is connected controller 7 via controlling interface 12, and further connected LAN cable 18 via communication controller 16.

The aforementioned wall computer module has the module body 11 fixed on the wall of a building and used.

And, when a person stands in front of the module body 11, the image of the person is taken by the imaging means 15, 16 and the features such as face and body are pattern-recognized, or bar code and calra code attached to the breast, hat and clothes of the person are pattern-recognized to specify the person.

And, in this example, the computer body 8 incorporates the hand pointing type input unit shown in Fig. 1 or Fig. 5, and input of information into the computer body 8 is effected by the action of the hand and finger of the person.

In the wall computer module structured as described above, when the module body 1 is fixed on the wall of a building and a person stands in front of the module body 1, for example, the action of the person or things the person wearing are taken by the imaging means 15, 16, and based on the image taken, certain information is inputted into the computer body 8, so that interface with the person can be effected without touching.

And, entry of information is easily possible while naturally standing, and also entry of information can be made easily at a place away from the equipment.

Further, like a case of using a touch panel, the display 11 is not contaminated and discomfort due to static electricity is not caused.

And, this wall computer module can be broadly applied to billboards on buildings and stations, wall game board for attraction such as Othello game and chess, display panel for museums, and display board for working content and handling explanation of equipment at semi-conductor plants.

In the above wall computer module, since LAN cable 18 is connected to the communication controller 16, it is possible to display various and large volume of information according on the display 11.

Further, since the odor producer 6 and speaker 4 are disposed, the response from the computer body 8 can be seen by an odor or sound.

And, to the controller 7 for the lighting and air conditioner is connected CPU 9 via a controlling interface 12, so that supplementary facilities of buildings can be easily controlled.

Further, as the non-contact IC card transceiver 5 is disposed, transfer of information with the non-contact IC card is easily possible.

In the above examples, two imaging means 15, 16 are disposed on either side of the display 11, but this invention is not limited to the above examples. It is needless to say that one or three or more imaging means may be disposed.

This invention is particularly described according to preferable examples, but it is understood by those skilled in the art that modification and variation in the shape and description may be made without departing from the spirit and scope of this invention.

## Claims

1. A hand pointing type input unit comprising:
   a display to indicate certain information,
   a plurality of imaging means to take an image of the hand or finger of an inputting person indicated to said display,
   a direction calculating means to calculate the direction which is indicated by said hand or finger to the display based on an image taken by the imaging means,
   a position indicating means to indicate the position on said display corresponding to the direction calculated by said direction calculating means, on said display by the cursor,
   a click action detecting means to detect the click action of the hand or finger, and
   a selection means to select the information at a part where said cursor is positioned when the click action is detected by said click action detecting means, as the information instructed by said inputting person.

2. A wall computer module comprising:
   a board type module body to be fixed on a wall,
   a display to be disposed on the front face of the module body and to indicate certain information,
   an imaging means to be disposed on said module body, and
   a computer body disposed on said module body to control said display and input information based on an image taken by said imaging means.

# FIG.1

# FIG.2

```
        ┌─────────────┐
        │    START    │
        └─────────────┘
               │
    ┌──────────────────────┐
    │  Extracts a picture of │──── S1
    │  hand from entire image│
    └──────────────────────┘
               │
    ┌──────────────────────┐
    │  Calculates the direction│
    │  indicated by the      │──── S2
    │  forefinger            │
    │  to the display        │
    └──────────────────────┘
               │
    ┌──────────────────────┐
    │ Moves the cursor to a position│
    │ on the display corresponding  │
    │ to the direction indicated    │──── S3
    │ by the forefinger             │
    └──────────────────────┘
               │
          ◇ S4
      Was click action
          effected?
    NO ──                 
          YES
               │
    ┌──────────────────────┐  S5
    │ Selects information of a part │
    │ where the cursor is positioned│
    │ when the click action         │
    │ was effected, as input        │
    │ information                   │
    └──────────────────────┘
               │
        ┌─────────────┐
        │     END     │
        └─────────────┘
```

# FIG.3

# FIG.4

## FIG.5

## FIG.6

# FIG.7